(19) Europäisches Patentamt
European Patent Office
Office européen des brevets

(11) Publication number: **0 103 975**
**B1**

(12) **EUROPEAN PATENT SPECIFICATION**

(45) Date of publication of patent specification: **26.11.86**

(51) Int. Cl.$^4$: **C 08 F 14/26**

(21) Application number: **83304635.2**

(22) Date of filing: **10.08.83**

(54) **Process for the suspension polymerization of tetrafluoroethylene.**

(30) Priority: **11.08.82 US 407245**

(43) Date of publication of application:
**28.03.84 Bulletin 84/13**

(45) Publication of the grant of the patent:
**26.11.86 Bulletin 86/48**

(84) Designated Contracting States:
**DE FR GB IT NL**

(56) References cited:
**EP-A-0 006 344**
**GB-A- 836 741**

(73) Proprietor: **E.I. DU PONT DE NEMOURS AND COMPANY**
**1007 Market Street**
**Wilmington Delaware 19898 (US)**

(72) Inventor: **Cavanaugh, Robert John**
**4 Foxboro Drive**
**Vienna, WV 26105 (US)**

(74) Representative: **Myerscough, Philip Boyd et al**
**J.A.Kemp & Co. 14, South Square Gray's Inn**
**London, WC1R 5EU (GB)**

**EP 0 103 975 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

Homopolymerization of tetrafluoroethylene in aqueous medium can be carried out by two distinctly different procedures. In one procedure, called suspension polymerization, very little dispersing agent is employed and agitation is carried out vigorously in order to produce a precipitated resin, commonly referred to as "granular" resin. In the other procedure, sufficient dispersing agent is employed and agitation is mild in order to produce small colloidal size particles dispersed in the aqueous reaction medium. In this second procedure, called aqueous dispersion polymerization, precipitation (i.e. coagulation) of resin particles is avoided. The two procedures produce distinctly different products. Granular resin can be molded in various forms, whereas resin produced by the aqueous dispersion method cannot be molded but is fabricated by dispersion coating or by converting to powder for paste extrusion with a lubricating medium. Granular resin is incapable of being paste extruded or dispersion coated.

A disadvantage which sometimes occurs during aqueous suspension polymerization is formation of adhesions, i.e. unwieldy large clumps of resin particles, which form in the polymerization equipment, especially along walls of the reactor, and may clog the equipment as well as reduce yield of recoverable polymer. This formation of adhesions is particularly evident when ionic polymerization initiators are employed. Methods developed in the art to reduce the amount of adhesions formed have heretofore been directed to making the walls of the reaction vessel slick or smooth to make it difficult for the adhesions to build up.

In accordance with the invention there is provided a process for the suspension polymerization of tetrafluoroethylene in the presence of an ionic initiator in an aqueous medium at a temperature of 40°C to 120°C to obtain precipitated polymeric tetrafluoroethylene, characterised by employing in the aqueous medium at least one sulfonate of the formula

$$F\text{-}(CF_2\text{—}CF_2)_n\text{-}CH_2\text{—}CH_2SO_3M$$

wherein n is a cardinal number of from 2 to 6 and M is a cation having a valence of 1, wherein said sulfonate or mixture of sulfonates is present in a concentration of between 5 and 150 ppm based on amount of water used in the polymerization. By this process, formation of adhesions is reduced.

The polymerization of tetrafluoroethylene in aqueous medium to produce granular tetrafluoroethylene polymer is well known in the art. Tetrafluoroethylene (TFE) monomer is typically admixed or contacted with an aqueous medium (i.e. water) containing a polymerization initiator. Ordinarily, TFE monomer is introduced into the medium under pressure. Typical conditions include polymerization temperatures of 40—120°C; preferably 60—90°C; and pressure of $10—50\times10^5$ Pa. The polymerization is ordinarily carried out in a vigorously stirred autoclave.

Initiators that can be employed are usually ionic initiators. Examples of ionic polymerization initiators include inorganic persulfates such as ammonium persulfate or alkali metal persulfates such as potassium persulfate and the like. The initiator is added prior to initiation of polymerization. The amount of initiator employed depends on the temperature of polymerization, the nature of the initiator, the molecular weight of the polymer desired, and the rate of reaction desired. Thus, the amount will vary depending on the results desired by one skilled in the art. Ordinarily, the amount will be between 1 and 200 ppm based on water present.

A small amount of dispersing agent is present in the suspension polymerization mixture. Ordinarily it is an anionic substantially nontelogenic dispersing agent. The amount employed aids in promoting particle nuclei formation but it is not an amount sufficient to cause particles to remain in the dispersion. Commonly employed dispersing agents are fluorinated carboxylates containing 7—20 carbon atoms, such as ammonium polyfluorocarboxylates. The amount of dispersing agent present is ordinarily between about 5 ppm and 150 ppm based on weight of water employed in the aqueous dispersion, which is insufficient to cause formation of colloidal polymer particles. The dispersing agent is added prior to initiation of polymerization. The invention herein lies in replacing these polyfluorocarboxylates with the sulfonates described herein.

Sometimes, if desired, a small amount of a nonionic dispersing agent can be added, such as "Triton"®X-100, to the sulfonate.

Polymerization is ordinarily carried out until the solids level (i.e., polymer content) of the aqueous mixture is between 15 and 40 percent by weight of the mixture.

Sulfonates of the formula

$$F\text{-}(CF_2\text{—}CF_2)_n\text{-}CH_2\text{—}CH_2\text{—}CH_2SO_3M$$

employed in the reaction are most readily available as a mixture of compounds in which n is a cardinal number of 2—6. Preferably the average value of n in such a mixture will be about 4. The cation M is preferably hydrogen, ammonium or an alkali metal, and most preferably is $H^+$, $NH_4^+$, $Na^+$, $Li^+$ or $K^+$.

The resin produced herein is of the same quality and is useful in the same manner as granular tetrafluoroethylene polymers known heretofore. For example, the polymers are useful in making molded articles.

The Examples hereinbelow describe the invention in greater detail, while the comparisons compare a known commonly used surfactant.

Examples and Comparisons

A clean 38-liter polykettle was charged with the specified amount of demineralized water, a specified solution (0.226 grams/liter concentration) of an octyl phenyl polyethylene oxide surfactant ("Triton"®X-100, Rohm and Haas Company) and the indicated sulfonate surfactant (or known commonly used surfactant). The contents of the polykettle were heated to 65°C and evacuated and purged three times with nitrogen. The polykettle was agitated with a two-blade, 45° pitch agitator at 600 rpm. Tetrafluoroethylene was then added to the evacuated polykettle until the pressure was $1.72\times10^6$ Pa. A solution of ammonium persulfate (1.0 grams/liter) was then pumped into the polykettle at the rate of 50 ml/min until the desired amount was added. After the polymerization began, as evidenced by a drop in pressure, tetrafluoroethylene was added to maintain the pressure at $1.72\times10^6$ Pa. After the desired amount of tetrafluoroethylene had been added, the feed was stopped and the polykettle was allowed to react down. A vacuum was applied if necessary. The pressure on the polykettle was brought back to atmospheric and the contents cooled to 50°C. The polymer was discharged from the polykettle and separated from the water. The adhesions were removed from the granular polymer and scraped from the interior of the polykettle if necessary. The adhesions were combined and weighed. The tables following records the pertinent data of the Examples and Comparisons run.

TABLE I—Examples

| Example | Surfactant Type | Surfactant Amount Grams | Surfactant Amount PPM (based on water) | TFE kg | Water kg | Ammonium persulfate Grams | Ammonium persulfate PPM (Based on water) | ml Triton X-100 solution CO. 226 g/l) | Adhesions kg |
|---|---|---|---|---|---|---|---|---|---|
| 1A | Ammonium salt of perfluoro alkyl (avg. C—8) ethane sulfonic acid | 1.0 | 52 | 11.45 | 19.1 | 0.20 | 10 | 13 | 0 |
| 1B | Same as 1A | 1.5 | 78 | 11.45 | 19.1 | 0.20 | 10 | 13 | 2.05 |
| 2A | Same as 1A | 1.2 | 63 | 10.6 | 19.1 | 0.20 | 10 | 13 | 0.9 |
| 2B | Same as 1A | 1.2 | 63 | 10.6 | 19.1 | 0.20 | 10 | 13 | 0.3 |
| 3A | Perfluoro alkyl (avg. C—8) ethane sulfonic acid | 1.05 | 50 | 10.6 | 21.0 | 0.20 | 9.5 | 16 | 0.2 |
| 3B | Same as 3A | 1.32 | 69 | 10.6 | 19.1 | 0.20 | 10 | 13 | 0.7 |
| 4 | Same as 1A | 1.0 | 52 | 10.6 | 19.1 | 0.15 | 7.9 | 13 | 0.2 |
| 5 | Same as 1A | 0.8 | 42 | 10.6 | 19.1 | 0.10 | 5.2 | 13 | 3.2 |

TABLE II—Comparisons

| Comparison | Surfactant | | | TFE kg | Water kg | Ammonium persulfate | | ml Triton X-100 solution CO. 226 g/l) | Adhesions kg |
|---|---|---|---|---|---|---|---|---|---|
| | Type | Amount | | | | | | | |
| | | Grams | PPM (based on water) | | | Grams | PPM (Based on water) | | |
| C-1 | Ammonium perfluoro caprylate | 1.3 | 71 | 11.45 | 18.2 | 0.20 | 11 | 13 | 5.45 |
| C-2 | Same as C-1 | 1.2 | 63 | 10.6 | 19.1 | 0.20 | 10 | 13 | 4.6 |
| C-3 | Same as C-1 | 1.0 | 52 | 10.6 | 19.1 | 0.15 | 7.9 | 13 | set-up |
| C-4 | Same as C-1 | 0.8 | 42 | 10.6 | 19.1 | 0.10 | 5.2 | 13 | 5.7 |

As is seen from Tables I and II, in general, adhesions are much less using a perfluoroalkyl ethane sulfonate or acid than using ammonium perfluorocaprylate, a known commonly used surfactant.

**Claims**

1. A process for the suspension polymerization of tetrafluoroethylene in the presence of an ionic initiator in an aqueous medium at a temperature of 40°C to 120°C to obtain precipitated polymeric tetrafluoroethylene, characterised by employing in the aqueous medium at least one sulfonate of the formula

$$F{-}(CF_2{-}CF_2)_n{-}CH_2{-}CH_2SO_3M$$

wherein n is a cardinal number of from 2 to 6 and M is a cation having a valence of 1, wherein said sulfonate or mixtures of sulfonates is present in a concentration of between 5 and 150 ppm based on amount of water used in the polymerization.

2. A process according to claim 1 wherein there is used a mixture of sulfonates in which n has an average value of about 4.

3. A process according to claim 1 or 2 wherein M is hydrogen, ammonium, sodium, lithium or potassium.

4. Use of a granular tetrafluoroethylene resin produced by a process as claimed in claim 1, 2 or 3 in the production of molded articles.

**Patentansprüche**

1. Verfahren zur Suspensionspolymerisation von Tetrafluorethylen in Gegenwart eines ionischen Initiators in einem wässrigen Medium bei einer Temperatur von 40°C bis 120°C, um ausgefälltes Polytetrafluorethylen zu erhalten, dadurch gekennzeichnet, dass man in dem wässrigen Medium mindestens ein Sulfonat der Formel

$$F{-}(CF_2{-}CF_2)_n{-}CH_2{-}CH_2SO_3M$$

verwendet, worin n eine Kardinalzahl von 2 bis 6 und M ein Kation von einer Valenz von 1 ist, wobei das Sulfonat oder Gemische von Sulfonaten in einer Konzentration von 5 bis 150 ppm, bezogen auf die Menge des bei der Polymerisation verwendeten Wassers, anwesend ist/sind.

2. Verfahren nach Anspruch 1, bei dem ein Gemisch von Sulfonaten verwendet wird, in dem n einen durchschnittlichen Wert von etwa 4 hat.

3. Verfahren nach Anspruch 1 oder 2, bei dem M Wasserstoff, Ammonium, Natrium, Lithium oder Kalium ist.

4. Verwendung eines körnigen Tetrafluorethylenharzes, hergestellt nach einem Verfahren gemäss Anspruch 1, 2 oder 3, bei der Herstellung von Formkörpern.

**Revendications**

1. Un procédé pour la polymérisation en suspension du tétrafluoroéthylène en présence d'un amorçeur ionique dans un milieu aqueux à une température de 40 à 120°C pour obtenir du tétrafluoroéthylène polymère précipité, caractérisé en ce que l'on utilise dans le milieu aqueux au moins un sulfonate de la formule

$$F{-}(CF_2{-}CF_2)_n{-}CH_2{-}CH_2SO_3M$$

dans laquelle *n* est un nombre cardinal de 2 à 6 et M est un cation ayant une valence de 1, dans lequel le sulfonate ou mélange de sulfonate est présent à une concentration de 5 à 150 ppm, sur la base de la quantité d'eau utilisée dans la polymérisation.

2. Un procédé selon la revendication 1, dans lequel on utilise un mélange de sulfonates dans lequel *n* a une valeur moyenne d'environ 4.

3. Un procédé selon la revendication 1 ou 2, dans lequel M est l'hydrogène, l'ammonium, le sodium, le lithium ou le potassium.

4. Utilisation d'une résine granulaire de tétrafluoroéthylène préparée par un procédé selon la revendication 1, 2 ou 3 dans la fabrication d'articles moulés.